# EUROPEAN PATENT APPLICATION

(11) **EP 3 018 793 A1**
(43) Date of publication of application: **11.05.2016**
(21) Application number: 15193079.9
(22) Date of filing: 04.11.2015
(51) Int. Cl.: H02J 9/04, H02J 7/00

(54) **SYSTEMS AND METHODS FOR BATTERY MANAGEMENT**

(30) Priority: 07.11.2014 US 201414536281
(71) Applicant: Schneider Electric IT Corporation, West Kingston, RI 02892 (US)
(72) Inventor: SCHULTZ, Lynn Ernest, Nashua, NH New Hampshire 03062 (US); DEOKAR, Vishwas Mohaniraj, Acton, MA Massachusetts 01720 (US); WHITE, Kevin E., Haverhill, MA Massachusetts 01830 (US)
(74) Representative: Zerbi, Guido Maria

(57) **Abstract**

According to at least one embodiment, an uninterruptible power supply (UPS) is provided. The UPS includes a first input configured to couple to a primary power source to receive primary power; a power bus coupled to a plurality of battery modules to receive back-up power; an output operatively coupled to the first input and the power bus to selectively provide, from at least one of the primary power source and the plurality of battery modules, uninterruptible power to a load; and a charge bus coupled to the plurality of battery modules to provide power to the plurality of battery modules. The UPS is configured to detect at least one battery module of the plurality of battery modules has reached a charging threshold and discontinue charging of the at least one battery module in response to detecting the at least one battery module has reached the charging threshold.

## Description

### BACKGROUND

### Technical Field

An Uninterruptible Power Supply (UPS) system may include a plurality of batteries in a parallel configuration. The methods and systems described herein ensure that the plurality of batteries operate safely within the UPS system.

### Background Discussion

An uninterruptible power supply (UPS) is used to provide backup power to an electrical device, or load, when the primary power source, or mains, fails. Typical loads include computer systems, but other loads, such as heating/cooling/ventilation systems, lighting systems, network switches and routers, and security and data center management systems may also be powered by a UPS. A UPS designed for data center or industrial use may provide backup power for loads of between 1 and 20kVA for several hours.

A UPS unit typically includes one or more batteries as a power source when AC mains power is unavailable. DC power provided by the battery is converted to AC power by a power converter circuit, which in turn is provided to the load. A battery charger, which converts AC power to DC power, may be included in the UPS to charge the battery when AC mains is available to ensure that backup power will be available when needed. The UPS may also include a control unit for automatically managing the operation of the UPS and the power conversion functions.

### SUMMARY

According to at least one embodiment, an uninterruptible power supply (UPS) is provided. The UPS includes a first input configured to couple to a primary power source to receive primary power; a power bus coupled to a plurality of battery modules to receive back-up power; an output operatively coupled to the first input and the power bus to selectively provide, from at least one of the primary power source and the plurality of battery modules, uninterruptible power to a load; and a charge bus coupled to the plurality of battery modules to provide power to the plurality of battery modules. The UPS is configured to detect at least one battery module of the plurality of battery modules has reached a charging threshold and discontinue charging of the at least one battery module in response to detecting the at least one battery module has reached the charging threshold.

The UPS may be configured to discontinue charging of the at least one battery module by opening a relay associated with the at least one battery module. The UPS may be configured to detect the at least one battery module has reached a discharging threshold and discontinue discharging of the at least one battery module in response to detecting the at least one battery module has reached the discharging threshold. The UPS may be configured to discontinue discharging of the at least one battery module by opening a switch. The UPS may be configured to detect coupling of a partially discharged battery module to the UPS; prevent provision of power above a threshold value to the partially discharged battery module; and adjust power provided on the charge bus in response to detecting the coupling.

The UPS may further include a communications bus configured to receive communications from the plurality of battery modules and a charger coupled to the charge bus and the communications bus. The charger may be configured to receive, via the communication bus, at least one communication indicating an amount of power to supply to the charge bus and supply, responsive to receipt of the at least one communication, the amount of power to the charge bus.

In the UPS, the at least one communication may include a plurality of communications from each of the plurality battery modules and the charger may be configured to determine the amount of power to supply to the charge bus at least in part by identifying a largest amount of power indicated within the plurality of communications. The plurality of communications may include a plurality of analog signals and the charger may include a diode-OR circuit to identify the largest amount of power by the plurality of analog signals. The plurality of battery modules may include a lithium-ion battery. The plurality of battery modules may include at least one battery module configured to transmit at least one analog signal. The at least one battery module may include a relay coupled to the charge bus to connect and disconnect the at least one battery module from the charge bus.

According to another embodiment, a first battery module is provided. The first battery module includes a battery string of lithium-ion cells; a battery module connector including a power bus contact coupled to the battery string and a charge bus contact coupled to the battery string, the charge bus contact being distinct from the power bus contact; a daisy chain connector including a power bus contact coupled to the battery string and a charge bus contact coupled to the battery string, the charge bus contact being distinct from the power bus contact; and a connector including contacts for data communications, power, and analog signals. The first battery module may be coupled to a second battery module.

According to another embodiment, a method of managing battery charging in an uninterruptible power supply (UPS) including a plurality of battery modules coupled to a charge bus is provided. The method includes acts of detecting at least one battery module of a plurality of battery modules has reached a charging threshold and discontinuing charging of the at least one battery module in response to detecting the at least one battery module has reached the charging threshold.

The method may further include acts of detecting the at least one battery module has reached a discharging threshold and discontinuing discharging of the at least one battery module in response to detecting the at least one battery module has reached the discharging threshold. The method may further include acts of detecting coupling of a partially discharged battery module to the UPS; prevent provision of power above a threshold value to the partially discharged battery module; and adjusting power provided on the charge bus in response to detecting the coupling.

In the method, the act of detecting the coupling may include an act of receiving an analog signal from a battery module coupled to the charge bus and the act of adjusting the power may include an act of adjusting power provided on the charge bus in proportion to a characteristic of the analog signal.

The method may further include an acts of receiving at least one additional analog signal from at least one additional battery module coupled to the charge bus and readjusting power provided on the charge bus in proportion to either the characteristic of the analog signal or at least one characteristic of the at least one additional analog signal. The method may further include an act of transmitting, by the at least one battery module, the at least one analog signal.

In the method, the act of discontinuing charging of the at least one battery module may include an act of discontinuing charging of a lithium-ion battery.

Still other aspects, embodiments and advantages of these example aspects and embodiments, are discussed in detail below. Moreover, it is to be understood that both the foregoing information and the following detailed description are merely illustrative examples of various aspects and embodiments, and are intended to provide an overview or framework for understanding the nature and character of the claimed aspects and embodiments. Any embodiment disclosed herein may be combined with any other embodiment. References to "an embodiment," "an example," "some embodiments," "some examples," "an alternate embodiment," "various embodiments," "one embodiment," "at least one embodiment," "this and other embodiments" or the like are not necessarily mutually exclusive and are intended to indicate that a particular feature, structure, or characteristic described in connection with the embodiment may be included in at least one embodiment. The appearances of such terms herein are not necessarily all referring to the same embodiment.

### BRIEF DESCRIPTION OF THE DRAWINGS

Various aspects of at least one embodiment are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a block diagram of an uninterruptible power supply (UPS) system, according to one embodiment;
FIG. 2 is a schematic circuit diagram of a portion of a UPS system according to one embodiment;
FIG. 3 is a schematic diagram of a portion of a UPS system according to one embodiment;
FIG. 4 is a schematic diagram of a portion of a UPS system according to one embodiment;
FIG. 5A is a schematic diagram of a portion of a battery pack according to one embodiment;
FIG. 5B is a schematic diagram of a portion of a battery pack according to one embodiment;
FIG. 5C is a schematic diagram of a portion of a battery pack according to one embodiment; and
FIG. 6 is a schematic diagram of connectors and signals used to couple a UPS to a battery pack according to one embodiment.

### DETAILED DESCRIPTION

Examples of the methods and systems discussed herein are not limited in application to the details of construction and the arrangement of components set forth in the following description or illustrated in the accompanying drawings. The methods and systems are capable of embodiment in other embodiments and of being practiced or of being carried out in various ways. Examples of specific embodiments are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated references is supplementary to that of this document; for irreconcilable inconsistencies, the term usage in this document controls.

Single phase UPSs may be used in various applications, such as wind turbines and solar photovoltaics. These UPSs may require a battery to operate within a wide temperature range (e.g., -20 degrees Celsius to +60 degrees Celsius) and over extended periods between battery changes (e.g., 5-7 years). Conventional batteries, such as valve-regulated-lead acid (VRLA) batteries may not be suitable for certain applications, because at high temperatures, the VRLA battery is subject to degradation, and at low temperatures, the chemical reaction within the VRLA slows down, which affects the battery's ability to deliver current and may also affect the battery's runtime.

In other embodiments, advanced chemistry batteries, such as Lithium-Ion (Li-ion) batteries, are used. Li-ion batteries may be used in a number of applications including, but not limited to, mobile devices, power tools, electric vehicles, etc. Li-ion batteries can typically operate in a wide range of temperatures and have a long operating life.

In addition, Li-ion batteries have advantageous volume and weight characteristics as compared to a VRLA battery. For example, for a given value of stored energy, a Li-ion battery may achieve a weight reduction of three to ten times as compared to a VRLA battery. In addition, Li-ion batteries generally have longer operating lives than VRLA batteries.

There are certain conditions to consider when using Li-ion battery technology. For example, a Li-ion battery may be sensitive to overcharge. To monitor for overcharge, control circuitry determines the voltage of each cell in a string of cells forming a battery and provides components to bypass charging current if one or more cells reaches a full state of charge while other cells in the string continue to charge. Similarly, over-discharge may damage a Li-ion battery. To monitor for over-discharge, control circuitry monitors each cell during discharge and provides components to disconnect a battery from a load if the any of the cells nears a threshold level of depletion (e.g. a threshold level of discharge). Charge control is also used to prevent a thermal event from occurring that damages the battery. In some embodiments, the state of charge of the battery may be properly gauged using a number of methods, such as coulomb counting.

The disclosure herein describes methods and systems to permit insertion of a battery (which may have a low state of charge) into a parallel, fully charged battery system while avoiding a high rate of charge after the initial insertion. To prevent a high rate of charge during and after insertion of the battery, some embodiments include a separate charge bus with a series diode to prevent uncontrolled current flow out of a fully charged battery into a lesser charged battery inserted in parallel. In at least one of these embodiments, a disconnect relay is provided to disconnect the charge bus from the battery to prevent overcharging. Also, in some embodiments, the main battery discharge path contains a diode which prevents uncontrolled current flow into a lesser charged battery connected in parallel. In these embodiments, a contactor in parallel with the diode closes around the diode when current is demanded from the battery by the UPS. This action reduces the power dissipation in the diode. In at least one embodiment, the function of the various diodes, relays, and contactors is implemented with solid state switches. In addition, in various embodiments, a charge current signal from the battery to the UPS battery charger enables the charger to monitor and control the maximum current into the battery pack.

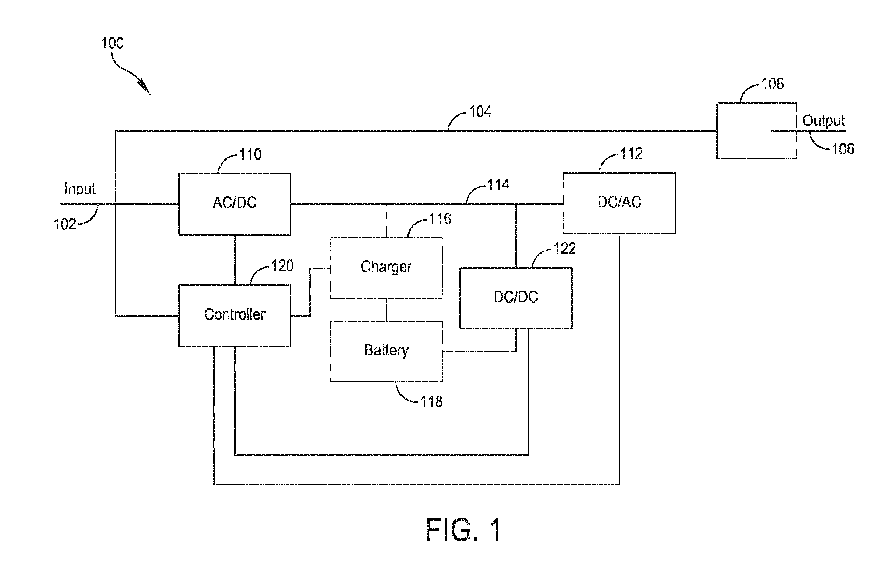

FIG. 1 illustrates a UPS system 100 according to aspects of the present disclosure. The UPS system 100 includes an input 102, an output 106, a bypass switch 108, a bypass line 104, an AC/DC converter 110, a DC bus 114, a DC/AC inverter 112, a battery charger 116, a battery 118, a DC/DC converter 122, and a controller 120. The input 102 is configured to be coupled to an AC power source such as a utility power source and to the AC/DC converter 110. The input 102 is also selectively coupled to the output 106 via the bypass line 104 and the bypass switch 108.

The AC/DC converter 110 is also coupled to the DC/AC inverter 112 via the DC bus 114. The DC/AC inverter 112 is also selectively coupled to the output 106 via the switch 108. The battery 118, which may be composed of multiple battery packs connected in parallel, is coupled to the DC bus 114 via the battery charger 116 and also to the DC bus 114 via the DC/DC converter 122. The controller 120 is coupled to the input 102, the switch 108, the battery charger 116, the AC/DC converter 110, and the DC/AC inverter 112. In other embodiments, the battery 118 and the charger 116 may be coupled directly to the AC/DC converter 110.

Based on the quality of the AC power received from the utility source, the UPS 100 is configured to operate in different modes of operation. For example, according to one embodiment, the controller 120 monitors the AC power received from the utility source at the input 102 and, based on the monitored AC power, sends control signals to the switch 108, the battery charger 116, the AC/DC converter 110, and the DC/AC inverter 112 to control operation of the UPS 100.

The controller 120 may be a digital controller, e.g., digital signal processor, complex programmable logic controller, microcontroller, or other appropriate digital platform. In another embodiment, the controller 120 may be an analog controller, such as a hysteresis current controller. In yet another embodiment, the controller 120 may be a combination digital and analog controller.

The UPS 100 may be configured to operate in several modes of operation. For example, the UPS 100 may have modes of operation including bypass, online, or battery. In both battery and online modes, the DC/AC inverter 112 may be used by the UPS 100 to generate the output voltage 106.

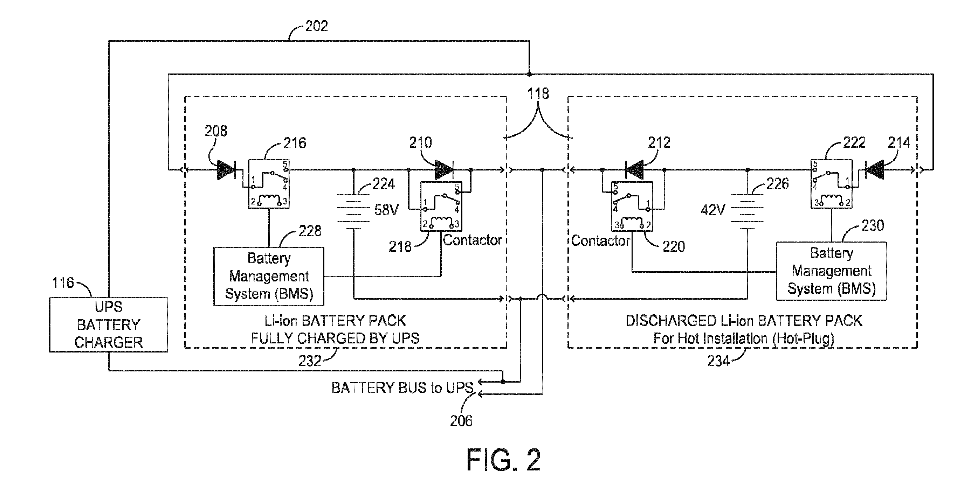

FIG. 2 is a schematic circuit diagram of a portion 200 of the UPS system 100 showing the battery 118 and charger 116 in greater detail in accordance with one embodiment. As shown in FIG. 2, the battery 118 includes a plurality of battery packs 232 and 234, according to one embodiment. As illustrated in FIG. 2 in combination with FIG. 1, the portion 200 includes the battery charger 116, a charge bus 202, a battery bus 206, contactors 218 and 220, batteries 224 and 226, battery management system (BMS) components 228 and 230, and the battery packs 232 and 234. The battery charger 116 is coupled to the charge bus 202. The charge bus is coupled to diodes 208 and 214. The diode 214 is coupled to the relay 222. The relay 222 is coupled to the battery 226. The diode 208 is coupled to the relay 216. The relay 216 is coupled to the battery 224. The batteries 224 and 226 are respectively coupled to the diodes 210 and 212. The diodes 210 and 212 are both coupled to the battery bus 206. The contactors 218 and 220 are respectively coupled in parallel with the diodes 210 and 212. The battery bus is coupled to the DC/DC converter 122, or in some embodiments, in which a DC/DC converter is not used, the battery bus may be coupled directly to the AC/DC converter 110. Each of the BMS components 228 and 230 is respectively integral to each battery pack 232 and 234. The BMS component 228 is coupled to the relay 216 and the contactor 218 to control the operation of the relay 216 and the contactor 218 as described below. The BMS component 230 is coupled to the relay 222 and the contactor 220 to control the operation of the relay 222 and the contactor 220 as described below.

In an embodiment illustrated by FIG. 2, the charge bus 202, the diodes 208 and 214, and the relays 216 and 222 form a first conductive path that is able to be open or closed between the battery charger 116 and the batteries 224 and 226. Also, in this embodiment, the battery bus 206 and the contactors 218 and 220 form a second conductive path between the batteries 224 and 226 and the DC/DC converter 122. While the UPS 100 operates in online mode, the battery charger 116 conducts electric current to the batteries 224 and 226 through the first conductive path. While the UPS 100 operates in battery mode, the batteries 224 and 226 conduct electric current to the DC/DC converter 122 via the second conductive path.

The diode 208 prevents current flow from the fully charged battery 224 to the charge bus 202. This is used to protect newly inserted, discharged batteries, such as may be included in the battery pack 234, from exposure to high current via the charge bus 202. The diode 212 provides a similar benefit, namely preventing high current flow from the fully charged battery 224 via the battery bus 206 into the discharged battery 226.

The relays 216 and 222 selectively open and close portions of the first conductive path. The relays 216 and 222 are included due to the charge characteristics of Li-ion battery chemistry. This battery type is preferably disconnected from the battery charger 116 upon reaching a charging threshold (e.g., being fully charged).

In some embodiments, the battery charger 116 is configured to receive feedback from each battery pack that indicates an amount of charge current flowing to the battery pack. In at least one embodiment, the current feedback is provided by the BMS in the battery pack. For example, the battery charger 116 may limit the current it conducts to a value recommended by the manufacturer of a battery pack. In these embodiments, the battery charger 116 is configured to increase voltage until a maximum allowed current is conducted to the least charged battery pack on the charge bus 202.

The contactors 218 and 220 shunt the diodes 210 and 212 while the UPS operates in battery mode. This arrangement prevents power dissipation in the diodes 210 and 212 which would otherwise occur during discharge of the batteries 224 and 226. In some embodiments, the contactors 218 and 220 close under control of the BMSs 228 and 230 when battery discharge current is sensed.

The arrangement of components illustrated in FIG. 2 protects batteries, such as those included in battery packs 232 and 234, from potentially damaging electric current, such as electric currents found within conventionally arranged UPS battery buses. While VRLA batteries are relatively robust regarding such current, and therefore generally are not damaged by exposure to such current regardless of their charge state, discharged Li-ion batteries may be damaged when exposed to charge current above a threshold value (e.g., in excess of the manufacturer's rating). Thus the battery pack 234, even if fully or substantially discharged (e.g., charged to approximately 30% of capacity), may be hot-plugged (i.e., replaced without shutting down the UPS system) without incurring damage due to high charge current.

In some embodiments, the diodes 208, 210, 212, and 214; relays 216 and 222; and contactors 218 and 220 are implemented using redundant power semiconductors, such as MOSFETs, which are under the control of a BMS within the battery pack.

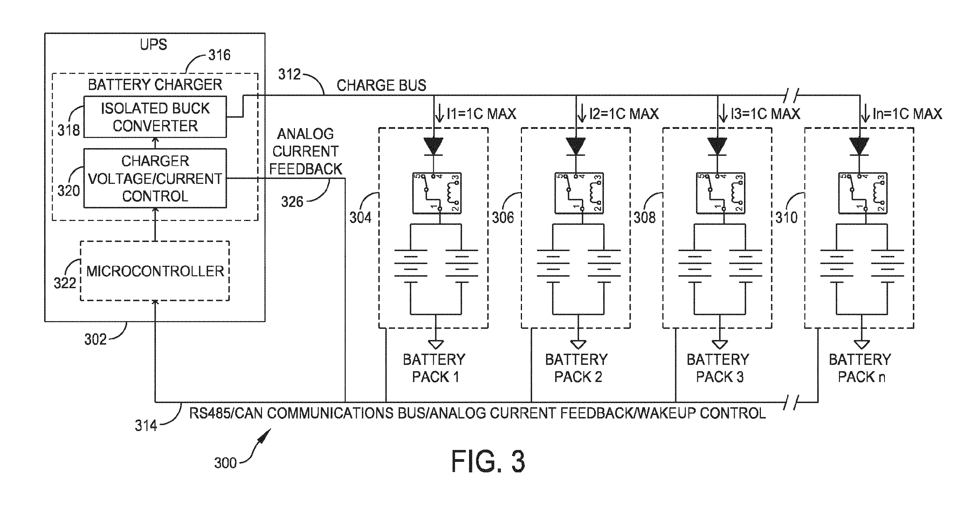

FIG. 3 is a schematic diagram of a battery system 300 that can be used in the UPS 100, according to one embodiment. As shown in FIG. 3, the battery system 300 includes a battery control system 302; a plurality of battery packs including battery packs 304, 306, 308, and 310; a charge bus 312; and a communications bus 314. The battery control system 302 includes a battery charger 316 and a microcontroller 322. The battery charger 316 includes a converter 318 and a voltage/current control circuit 320. The battery packs 304, 306, 308, and 310 are coupled to the converter 318 of the battery charger 316 via a charge bus 312. The battery packs 304, 306, 308, and 310 are also in data communication with the voltage/current control 320 and the microcontroller 322 via the communications bus 314. Each of the battery packs 304, 306, 308, and 310 includes a diode coupled in series with a relay coupled to one or more batteries. In each of the battery packs 304, 306, 308, and 310, the diode prevents the one or more batteries from discharging current onto the charge bus 312 and the relay prevents the charge bus 312 from conducting current to the one or more batteries once the batteries are fully charged.

In an embodiment illustrated in FIG. 3, each of the battery packs 304, 306, 308, and 310 transmits an analog charge current feedback signal 326 to the voltage/current control circuitry 320 via the communications bus 314. Each analog charge current feedback signal may be proportional to the charge current for the battery pack producing the signal. Thus each of battery packs 304, 306, 308, and 310 may produce a unique analog charge current signal. As shown in FIG. 3, assume each of the battery packs 304, 306, 308, and 310 has a maximum safe charge current of 1C. In response to receiving the analog charge current feedback signal 326, the voltage/current control 320 sets the current limit of the converter 318 such that no single battery pack receives more than the specified 1C charge current, thereby providing control of the current conducted on the charge bus 312 to the battery pack with the lowest charge state.

The arrangement of components in the UPS system 300 prevents uncontrolled conduction of current to a discharged battery pack connected to the UPS system 300, and is particularly useful for hot-plugging of battery packs. For example, if the battery pack 310 were discharged and then connected to the UPS system 300, while the UPS system is operating, the amount of current conducted to battery pack 310 is monitored and regulated. The analog charge current feedback signal 326 from each of the battery packs 304, 306, 308, and 310 is configured such that only the battery pack with the highest charge current communicates with the battery charger 316 which controls the voltage on the charge bus 312 to limit the highest battery pack current to not more than 1C.

In the system shown in FIG. 3 only the battery charge portion is shown. The battery packs shown in FIG. 3 may be discharged in a manner similar to that used for the battery packs of FIG. 2 using a contactor in parallel with a diode.

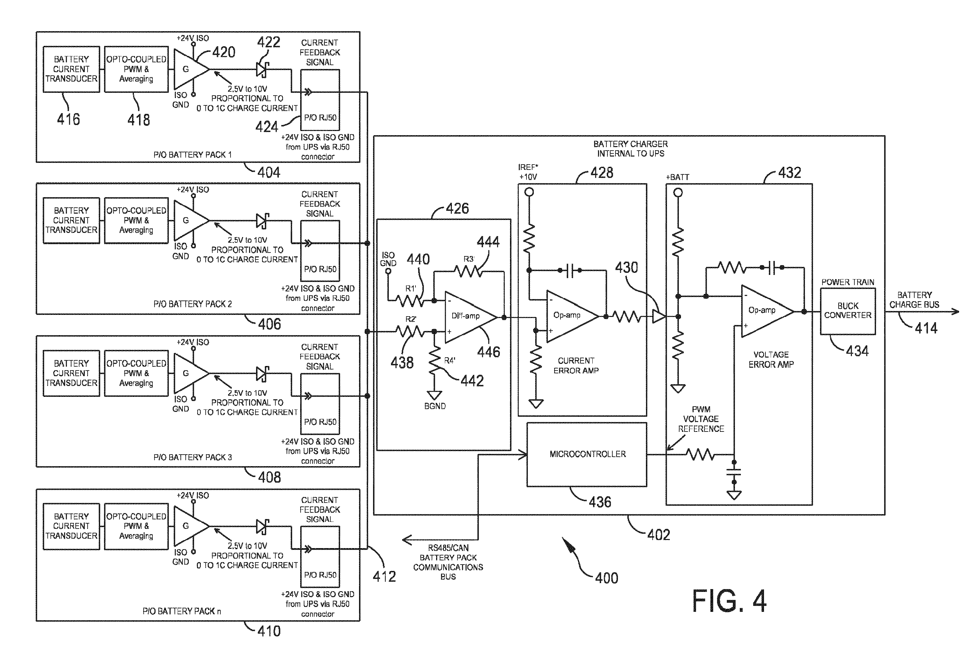

FIG. 4 is a detailed illustration of a portion 400 of a UPS system, according to one embodiment. As shown in FIG. 4, the portion 400 includes a battery charger 402 and battery current monitor modules 404, 406, 408, and 410, a current feedback bus 412, and a charge bus 414. The battery charger 402 can be used in place of the battery control system 302 shown in FIG. 3, and each of the battery current monitor packs can be used in one of the battery packs 304, 306, 308 and 310 of FIG. 3. The current feedback bus 412 and the charge bus 414 may be used in place of the analog charge current feedback signal 326 and the charge bus 312 in the system of FIG. 3.

The battery charger 402 receives an analog charge current feedback signal from the battery current monitor modules 404, 406, 408, and 410 via the current feedback bus 412. As shown in FIG. 4, the battery monitor module 404 includes a battery current transducer 416, an opto-coupled pulse width modulated (PWM) and averaging module 418, an amplifier 420, a Schottky diode 422, and a connector 424. The battery current transducer 416 is coupled to the opto-coupled PWM and averaging module 418. The opto-coupled PWM and averaging module 418 is coupled to the amplifier 420. The amplifier 420 is coupled to the Schottky diode 422. The Schottky diode 422 is coupled to the connector 424. The connector 424 is coupled to the current feedback bus 412. Each battery monitor module 406, 408, and 410 may include these components in the arrangement described above.

In some embodiments, the battery packs are coupled to the UPS system 100 using a "flying battery" topology and isolation is needed to meet the touch safe requirement of 0.7 mA peak. Embodiments manufactured for international markets, manifest an appreciation that the "flying battery" topology would result in battery ground being as much as 370V below neutral at a duty cycle of 50% at a line frequency rate. Thus these and other embodiments include the opto-coupled PWM and averaging module 418 to provide for a touch safe connector to the communication bus 412. The opto-coupled PWM and averaging module 418 also creates an isolated reference voltage proportional to battery pack charge current.

More specifically, in at least one embodiment, to generate a touch safe analog charge current signal proportional to charge current, the opto-coupled PWM and averaging module 418 implements a PWM scheme in which the depth of modulation (duty cycle) of the PWM signal is proportional to charge current. Averaging this PWM signal results in a DC voltage. This DC voltage which, is proportional to charge current, and generated by each of the paralleled battery monitor modules 404, 406, 408, and 410 in the UPS system, may be diode ORed resulting in the battery pack with the highest charge current (pack with the lowest state of charge) taking control of the current limit of the battery charger 402. In addition to prevent a particular battery pack from being charged, the associated relay for the battery pack can be opened.

The battery charger 402 includes differential amplifier circuit 426, current error amplifier circuit 428, diode 430, voltage error amplifier circuit 432, buck converter 434, and microcontroller 436. The differential amplifier circuit 426 includes resistors 438, 440, 442, and 444 and amplifier 446. As shown in FIG. 4, the differential amplifier circuit 426 is coupled to the current feedback bus 412 and the current error amplifier circuit 428. The current error amplifier circuit 428 is coupled to the diode 430. The diode 430 is coupled to the voltage error amplifier circuit 432. The voltage error amplifier circuit 432 is coupled to the buck converter 434 and the microcontroller 436. The buck converter 434 is coupled to the charge bus 414. Each of the resistors 438, 440, 442, and 444 is coupled to the amplifier 446.

The differential amplifier circuit 426 receives a charge current feedback signal (which may result from a diode OR as described herein) via the current feedback bus 412. In one embodiment, the leg resistors 438 and 440 include five series 1206 resistors (274k each) to meet a 5.3 mm creepage requirement (with one resistor shorted) for a total of 1.37 meg-ohms. This will limit total leakage current to less than .7mA peak (with one resistor shorted), which meets the EN60950 leakage current requirement. These leg resistors maintain a touch safe voltage on a connector attached to the current feedback bus 412 and bridge the isolated ground referenced charge current feedback signal (which is referenced to the "touch safe" isolated ground of the battery current monitor module 404) producing a translated charge current feedback signal referenced to the potentially hazardous ground reference of the battery charger 402.

Also, in this embodiment, the amplifier 446 includes a low input bias current operational amplifier, and the gain setting resistors 442 and 444 are two series 681k resistors each resulting in a near unity gain differential amplifier. Additionally, in some embodiments, the IREF power source is under the control of the microprocessor 436 to provide a variable maximum charge current limit.

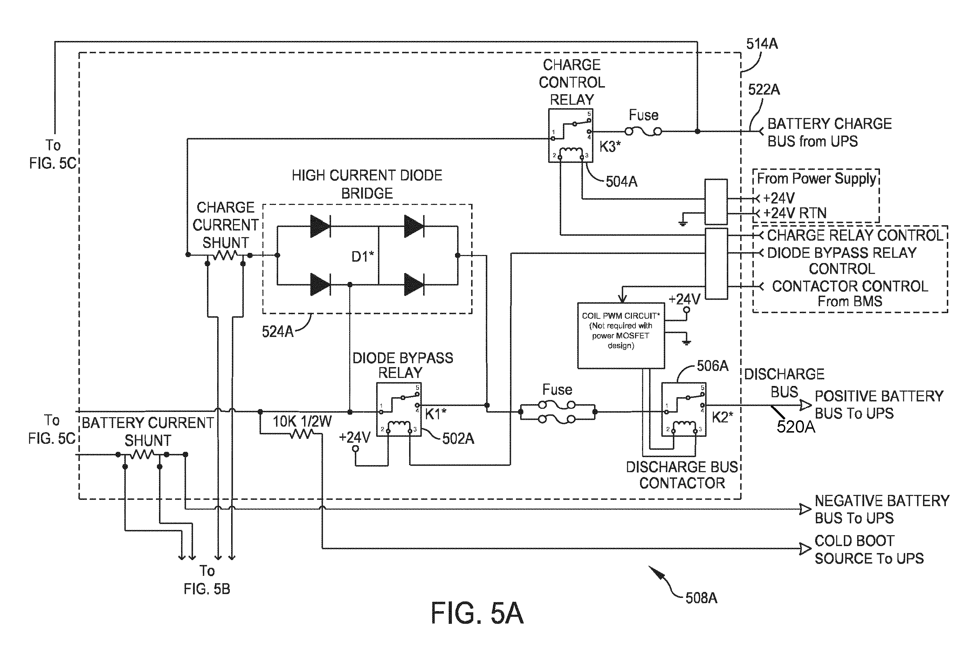

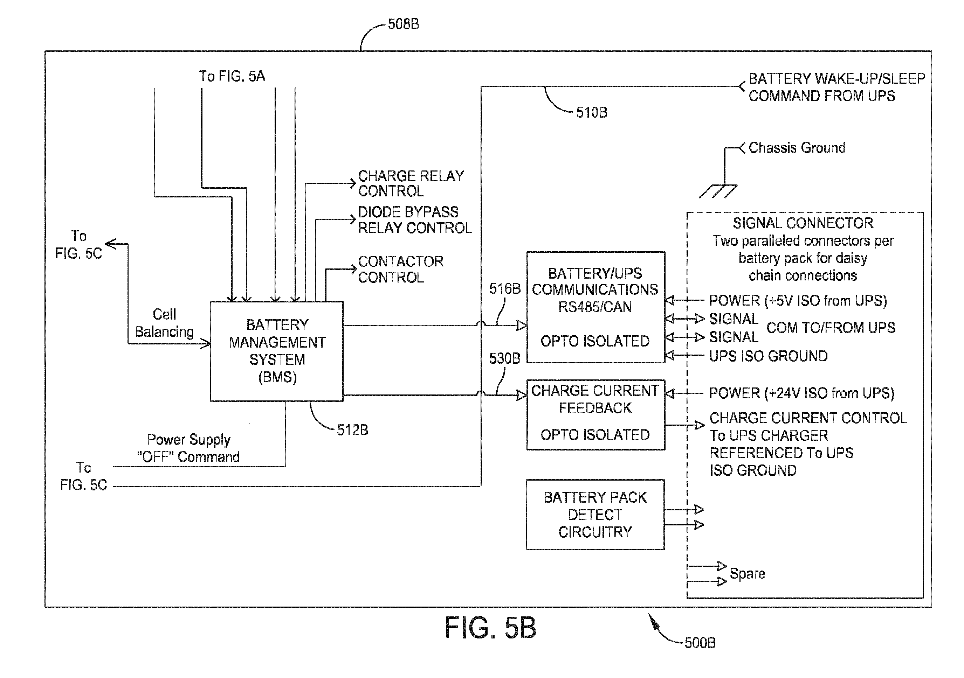

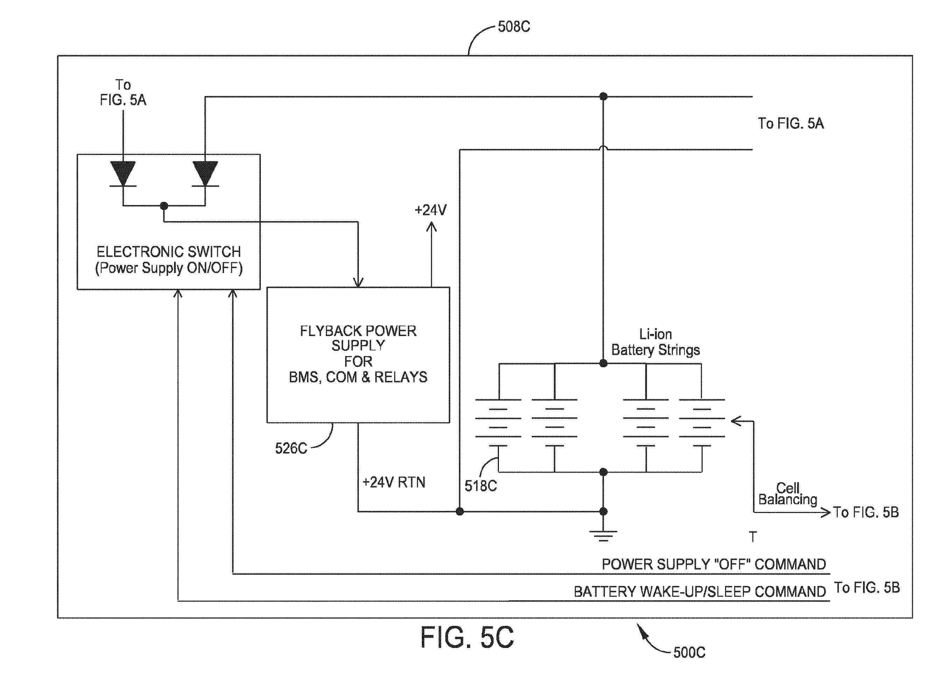

FIGS. 5A-5C are a detailed illustration of a portion 500 (comprising portions 500A, 500B, and 500C) of a battery pack, according to one embodiment. The portion or parts of the portion may be used with or in place of embodiments previously discussed, and may be included in the UPS System 100. As shown in FIG. 5A-5C, the portion 500A includes current control components 514A for management of current flow, a charge bus 522A, and a discharge bus 520A. The current control components 514A include relays 502A, 504A, and 506A and a diode 524A. The portion 500B includes a portion 508B comprised of a battery management system (BMS) 512B, communications bus 516B, battery pack wake-up/sleep command line from UPS 5110B, and a charge current analog feedback signal 530B. The portion 500C includes one or more battery strings 518C and a power supply 526C.

In an embodiment illustrated by FIGS. 5A-5C, the current control components 514A are coupled to the battery strings 518C. The relay 504A controls current from the charge bus 522A allowing current to charge the batteries when required and interrupting current when charging is complete. The charge bus may be coupled to additional battery packs (not shown). The current control components 514A composed of the relay 502A and the relay 506A control current flow from the batteries to the discharge bus 520A. The diode 524A prevents potentially damaging reverse current flow from the batteries to the charge bus 522A and from the discharge bus 520A to the batteries when the relay 502A is open. Potentially damaging reverse current may flow when a discharged battery pack is plugged into an operating system containing fully charged battery packs.

The BMS 512B communicates (i.e., transmits or receives) data via the communications bus 516B. The BMS 512B and the UPS system are coupled via the wake-up/sleep command line 510B. The battery strings 518C are coupled to the charge bus 522A and discharge bus 520A via the current control components 514A. The power supply 526C is coupled to the power consuming elements of the battery pack, such as the battery management system (BMS) 512B. The digital data generated by the BMS 512B inside the battery pack provides near real time information about the battery's voltage, state of charge, and temperature.

According to one embodiment illustrated by FIGS. 5A-5C, when connecting a discharged battery pack to an operating, fully charged UPS battery system, the relays 502A, 504A, and 506A are open to prevent any current flow into the discharged battery pack. On receiving a "wake up" signal from the UPS system via the wake-up/sleep command line 510B, the microprocessor in the BMS 512B of the battery pack will communicate with the battery charger in the UPS via the communication bus 516B. This communication commands the battery charger in the UPS to reduce output voltage on the charge bus 522A before the BMS 512B allows connection of charge voltage to the Li-ion battery 518C inside the pack via the relay 504A. In addition, responsive to the voltage on the discharge bus 520A being higher than the voltage inside the battery pack, the relay 506A closes. The battery charger next increases the voltage on the charge bus 522A until maximum current is flowing into the discharged battery pack. Responsive to the battery string 518C reaching a full state of charge, the BMS 512B disconnects the charge bus 522A from the battery pack by opening the relay 504A.

In some embodiments, the Wake Up / Sleep command is generated by the UPS system, for example by the controller 120. This command signals the battery pack to turn on its internal power supply 526C and begin operating. This signal is also used to shut down the battery pack when the stored energy in the battery has been exhausted and the UPS system has stopped drawing power from the battery pack. After a several minute delay following battery string 518C exhaustion, the UPS system completely shuts down by commanding the battery pack to "sleep" which turns off the battery pack power supply 526C.

In one embodiment, during battery mode operation, current is conducted through the diode 524A and the relay 506A to supply an inverter of the UPS system. The BMS 512B senses this conduction and energizes the relay 502A to reduce power dissipation resulting from voltage drop of the diode 524A. When the battery string 518C nears a discharge limit (e.g., the voltage reaching the low voltage disconnect value of approximately 38V), the BMS 512B transmits a command to disconnect the battery string 518C. In response to receiving the command to disconnect, the current control components 514A open the relays 502A and 506A.

In some embodiments, the relays 502A, 504A, and 506A include power MOSFETs to obtain the same functionality without using mechanical relays. Inverse series connection of two power MOSFETs may be required to prevent undesired current flow during insertion of a discharged battery pack into an operating UPS system.

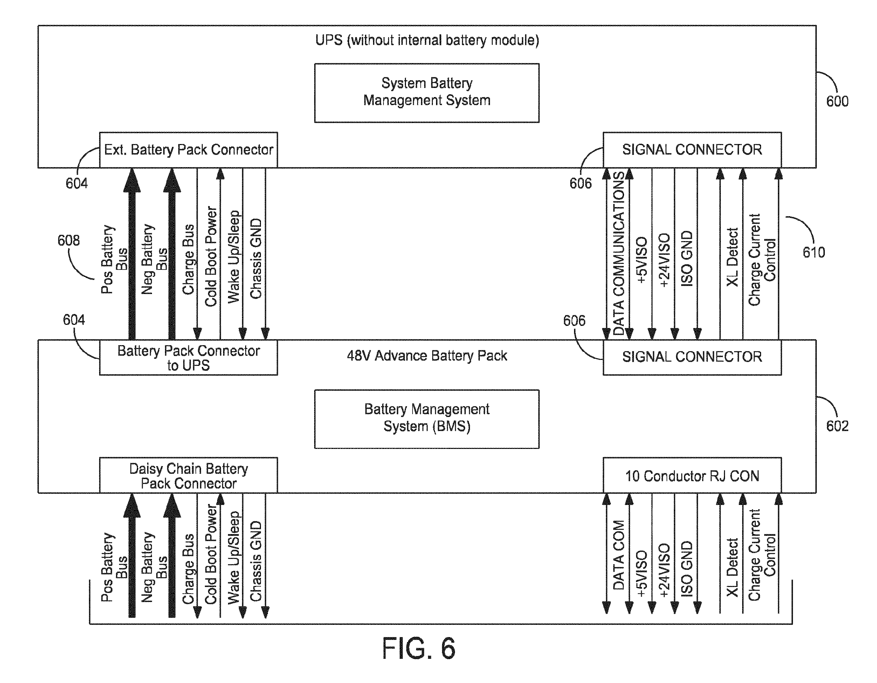

FIG. 6 illustrates connectors and signals used in some embodiments to couple a battery pack and a battery management system into a UPS, such as the UPS 100. FIG. 6 includes a UPS system 600, one or more battery packs 602, and cables 608 and 610. The one or more battery packs 602 may include a plurality of battery packs connected to one another in a daisy chain configuration. As shown in FIG. 6, the UPS system 600 and the one or more battery packs are respectively coupled to the cables 608 and 610 via battery pack connectors 604 and signal connectors 606 (e.g., an RJ 50 connectors). The cable 608 includes a battery bus, a charge bus, a cold boot power conductor, a wake up/sleep conductor, and a chassis ground conductor. The cable 610 includes a communication bus (e.g., a CAN or RS-485 compliant communications bus), an ISO 5 volt conductor, an ISO 24 volt conductor, an isolated ground conductor, an XL detect conductor, and a charge current control conductor.

In some embodiments, the battery pack connectors 604 include 2 power contacts (for the positive and negative battery bus) and 4 remaining auxiliary gold plated contacts. In one embodiment, the battery bus contacts are 10AWG rated for 105 deg C with a maximum current rating of 49A at 39V for 2kVA/1.6kW UPS. In this embodiment, the projected temperature rise is between 35 to 40 degrees Celsius. Also, in this embodiment, the 4 remaining auxiliary contacts are 18AWG rated.

In some embodiments, the signal connectors 606 have 10 positions and 10 contacts used for communication and other housekeeping signals. In these embodiments, two spare pins are present. The communications bus carries communications between the UPS system 600 and the one or more battery packs 602. The UPS system and the one or more battery packs may be arranged in a master/slave configuration, with the UPS system 600 being the master and one or more battery packs 602 being slaves. The UPS system 600 and the one or more battery packs 602 may communicate over the communications bus using a variety of protocols including, for example, a MODBUS protocol or an SMBus protocol. In some embodiments, the ISO voltages are generated by the UPS system 600. Table 1 lists a variety of signals that may be carried via the battery pack connectors 604 and the signal connectors 606 according to various embodiments.

**Table 1**

| 48V Advance Battery Pack Signal Definition | | | |
|---|---|---|---|
| **Signal Name** | **Signal Type** | **# of Pins** | **Comments** |
| Pos & Neg Battery Bus | Analog Output (Power) | 2 | +ve and -ve battery bus to UPS, part of Anderson connector |
| Charge Bus | Analog Input | 1 | Charge bus from the UPS. Current not to exceed 10A (Anderson aux contact) |
| Cold Boot Power | Analog Output | 1 | Current limited source from pos battery (Anderson aux contact) |
| Wake Up / Sleep | Analog Input | 1 | Battery pack wake up or shut down command from UPS ON with application of 12V @ 0.5 mA OFF with less than 2V (Anderson aux contact) |
| Chassis Ground | Analog Input | 1 | Drain wire connection (not UL compliant ground) to maintain chassis at ground potential. Needed for "flying battery" topologies. (Anderson aux contact) |
| | | | |
| Data Communications | Differential bidirectional | 2 | Differential signals referenced to ISO GND (SELV) |
| XL Detect | Analog Output | 2 | TBD (must be SELV) |
| +5VISO | Analog Input | 1 | +5V (isolated) from UPS referenced to ISO GND (SELV) |
| +24VISO | Analog Input | 1 | +24V (isolated) from UPS referenced to ISO GND (SELV) |
| ISO GND | Analog Input | 1 | Floating ground (SELV) |
| Charge Current Control | Analog Output | 1 | 2.5V to 10V proportional to 0 to 1C charge current Referenced to ISO GND (SELV) |
| Spare | | 2 | |

Various aspects and functions described herein in accord with the present disclosure may be implemented as hardware, software, firmware or any combination thereof. Aspects in accord with the present disclosure may be implemented within methods, acts, systems, system elements and components using a variety of hardware, software or firmware configurations. Furthermore, aspects in accord with the present disclosure may be implemented as specially-programmed hardware or software.

Any of the preceding embodiments can be implemented within a UPS, for example, a UPS having a DC battery as a backup power source. The UPS may be configured to provide backup power for any number of power consuming devices, such as computers, servers, network routers, air conditioning units, lighting, security systems, or other devices and systems requiring uninterrupted power. The UPS may contain, or be coupled to, a controller or control unit to control the operation of the UPS. For example, the controller may provide pulse width modulated (PWM) signals to each of the switching devices within the circuit for controlling the power conversion functions. In another example, the controller may provide control signals for the relays. In general, the controller controls the operation of the UPS such that it charges the battery from the AC power source when power is available from the AC power source, and inverts DC power from the battery when the AC power source is unavailable or during brown-out conditions. The controller can include hardware, software, firmware, a processor, a memory, an input/output interface, a data bus, and/or other elements in any combination that may be used to perform the respective functions of the controller.

In the embodiments described above, a battery is used as a backup power source. In other embodiments, other AC or DC backup sources and devices may be used including fuel cells, photovoltaics, DC micro turbines, capacitors, an alternative AC power source, any other suitable power sources, or any combination thereof. In embodiments of the invention that utilize a battery as a backup power source, the battery may be comprised of multiple batteries of cells coupled in parallel or in series.

In one or more of the preceding embodiments, the switching devices may be any electronic or electromechanical device that conducts current in a controlled manner (e.g., by using a control signal) and can isolate a conductive path. Representations of various switching devices, and other electronic devices, in the figures are exemplary and not intended to be limiting, as it will be appreciated by one skilled in the art that similar or identical functionality may be obtained using various types, arrangements, and configurations of devices. For example, one or more of the switching devices may contain one or more anti-parallel diodes, or such diodes may be separate from the switching devices. As indicated above, in some embodiments, the switching devices include a rectifier, for example, a controlled rectifier that can be turned on and off with the application of a control signal (e.g., an SCR, a thyristor, etc.). Additionally, other devices, such as resistors, capacitors, inductors, batteries, power supplies, loads, transformers, relays, diodes, and the like may be included in a single device, or in a plurality of connected devices.

In the embodiments described above, rectifier/boost circuits are described for use with uninterruptible power supplies, although it should be appreciated that the circuits described herein may be used with other types of power supplies.

Embodiments of the present invention may be used with uninterruptible power sources having a variety of input and output voltages and may be used in single phase or multiphase uninterruptible power supplies.

Having thus described several aspects of at least one example, it is to be appreciated that various alterations, modifications, and improvements will readily occur to those skilled in the art. Such alterations, modifications, and improvements are intended to be part of this disclosure, and are intended to be within the scope of the examples discussed herein. Accordingly, the foregoing description and drawings are by way of example only.

## Claims

1. An uninterruptible power supply (UPS) comprising:
a first input configured to couple to a primary power source to receive primary power;
a power bus coupled to a plurality of battery modules to receive back-up power;
an output operatively coupled to the first input and the power bus to selectively provide, from at least one of the primary power source and the plurality of battery modules, uninterruptible power to a load; and
a charge bus coupled to the plurality of battery modules to provide power to the plurality of battery modules,
wherein the UPS is configured to detect at least one battery module of the plurality of battery modules has reached a charging threshold and discontinue charging of the at least one battery module in response to detecting the at least one battery module has reached the charging threshold.

2. The UPS of claim 1, wherein the UPS is configured to discontinue charging of the at least one battery module by opening a relay associated with the at least one battery module.

3. The UPS of claim 1, wherein the UPS is configured to:
detect the at least one battery module has reached a discharging threshold; and
discontinue discharging of the at least one battery module in response to detecting the at least one battery module has reached the discharging threshold.

4. The UPS of claim 1, wherein the UPS is configured to:
detect coupling of a partially discharged battery module to the UPS;
prevent provision of power above a threshold value to the partially discharged battery module; and
adjust power provided on the charge bus in response to detecting the coupling.

5. The UPS of claim 1, further comprising:
a communications bus configured to receive communications from the plurality of battery modules; and
a charger coupled to the charge bus and the communications bus and configured to:
receive, via the communication bus, at least one communication indicating an amount of power to supply to the charge bus; and
supply, responsive to receipt of the at least one communication, the amount of power to the charge bus.

6. The UPS of claim 5, wherein the at least one communication includes a plurality of communications from each of the plurality battery modules and the charger is configured to determine the amount of power to supply to the charge bus at least in part by identifying a largest amount of power indicated within the plurality of communications.

7. The UPS of claim 6, wherein the plurality of communications includes a plurality of analog signals and the charger includes a diode-OR circuit to identify the largest amount of power by the plurality of analog signals.

8. The UPS of claim 1, wherein the plurality of battery modules includes at least one battery module configured to transmit at least one analog signal.

9. The UPS of claim 8, wherein the at least one battery module includes a relay coupled to the charge bus to connect and disconnect the at least one battery module from the charge bus.

10. A method of managing battery charging in an uninterruptible power supply (UPS) including a plurality of battery modules coupled to a charge bus, the method comprising:
detecting at least one battery module of a plurality of battery modules has reached a charging threshold; and
discontinuing charging of the at least one battery module in response to detecting the at least one battery module has reached the charging threshold.

11. The method of claim 10, further comprising:
detecting the at least one battery module has reached a discharging threshold; and
discontinuing discharging of the at least one battery module in response to detecting the at least one battery module has reached the discharging threshold.

12. The method of claim 11, further comprising:
detecting coupling of a partially discharged battery module to the UPS;
prevent provision of power above a threshold value to the partially discharged battery module; and
adjusting power provided on the charge bus in response to detecting the coupling.

13. The method of claim 12, wherein detecting the coupling includes receiving an analog signal from a battery module coupled to the charge bus and wherein adjusting the power includes adjusting power provided on the charge bus in proportion to a characteristic of the analog signal.

14. The method of claim 13, further comprising receiving at least one additional analog signal from at least one additional battery module coupled to the charge bus and readjusting power provided on the charge bus in proportion to either the characteristic of the analog signal or at least one characteristic of the at least one additional analog signal.

15. The method of claim 14, wherein discontinuing charging of the at least one battery module includes discontinuing charging of a lithium-ion battery.
